# EUROPÄISCHE PATENTSCHRIFT

(11) **EP 3 365 384 B1**
(45) Veröffentlichungstag und Bekanntmachung des Hinweises auf die Patenterteilung: **21.12.2022**
(21) Anmeldenummer: 16787399.1
(22) Anmeldetag: 21.10.2016
(51) Int. Cl.: C08J 7/04, F02F 3/00

(54) **VERBUNDWERKSTOFF FÜR EINEN KOLBEN**
COMPOSITE MATERIAL FOR A PISTON
MATÉRIAU COMPOSITE POUR PISTON

(30) Priorität: 21.10.2015 DE 102015220542
(43) Veröffentlichungstag der Anmeldung: 29.08.2018
(73) Patentinhaber: KS Kolbenschmidt GmbH, 74172 Neckarsulm (DE)
(72) Erfinder: FÖRSTER, Jan, 74172 Neckarsulm (DE)
(74) Vertreter: Horn Kleimann Waitzhofer Patentanwälte PartG mbB
(86) Internationale Anmeldenummer: PCT/EP2016/075371
(87) Internationale Veröffentlichungsnummer: WO 2017/068121

(56) Entgegenhaltungen:
- EP-A2- 1 933 022
- WO-A1-2014/139816
- WO-A2-2012/041769
- DE-A1-102005 057 754
- DE-A1-102013 206 801
- DE-A1-102014 212 927
- US-A1- 2008 163 751
- US-A1- 2013 269 666

## Beschreibung

Die Erfindung betrifft einen Verbundwerkstoff für einen Kolben einer Brennkraftmaschine gemäß den Merkmalen des Oberbegriffs des Patentanspruchs 1.

Verbund-Schaftbeschichtung für weniger Reibung und erhöhte Fresssicherheit.

Verbundwerkstoff für die Beschichtung von schnellbewegten Brennkraftmaschinenbauteilen, insbesondere Kolbenschäften, zur Senkung der Reibungsverluste und Erhöhung der Fresssicherheit sowie Erhöhung der Verschleißbeständigkeit.

Zur Sicherung von Einlauf- und Notlaufeigenschaften werden aus dem Stand der Technik Kolbenbeschichtungen aus Polymerkompositen basierend auf Polyamidimid- oder Epoxid-Trägerharzen oder Festschmierstoffmischungen mit unterschiedlichsten Füllstoffen (meist Graphit, oder MoS₂ und/oder Kohlenstofffasern neuerdings auch PTFE und Nanodiamanten) verwendet. Diese polymerbasierten Schichten werden zumeist monolagig oder aber mehrlagig in gelöster/dispergierter Form aufgetragen und anschließend unter Temperatur ausgehärtet/polymerisiert. Dabei verdampfen die verwendeten Lösemittel und die eingesetzte Masse verringert sich.

Die DE 10 2014 212 927 A1 beschreibt eine Beschichtung für einen Kolben, wobei die Beschichtungsbestandteile in eine ionische Flüssigkeit zum Auftrag der Beschichtung auf eine Funktionselementoberfläche eingebracht sind.

Die WO 2014/139816 A1 zeigt einen Kolben, der zumindest abschnittsweise am Kolbenschaft eine Gleitschicht umfasst, wobei die Gleitschicht eine Beschichtung, die eine vernetzte Matrix umfasst, und ein oder mehrere unmittelbar auf diese Beschichtung aufgebrachte Festschmierstoffkonglomerate aufweist.

Die WO 2012/041769 A2 beschreibt einen Kolben mit einer Schaftbeschichtung aus einer verschleißbeständigen inneren Schicht aus einer Polymermatrix mit darin dispergierten Keramikpartikeln, Aramidfasern und/oder Kohlenstofffasern und einer äußeren Schicht aus einer Polymermatrix mit darin dispergierten Festschmierstoffen.

Die US 2008/0163751 A1 zeigt einen Kolben, der aus einer Aluminiumlegierung gebildet ist und eine Außenfläche aufweist. Der Kolben umfasst eine an der Au-ßenfläche vorgesehene Grundierungsbeschichtung, die ein Silan aufweist.

Die DE 10 2005 057 754 A1 beschreibt einen Kolben, wobei der Kolben einen Mantelabschnitt aufweist, umfassend: eine auf einer Oberfläche des Mantelabschnitts gebildete harzhaltige Beschichtungslage und eine Mehrzahl von Konkavitäten, die in der harzhaltigen Beschichtungslage regelmäßig angeordnet sind.

Die EP 1 933 022 A2 zeigt einen Kolben, wobei auf dem Kolbenmantel zumindest bereichsweise eine 5 - 25 µm dicke PTFE-freie Lackschicht auf Polymerbasis mit Festschmierstoffen aufgebracht ist, wobei die Polymerbasis der Lackschicht von Polyamidimid (PAI) oder Epoxidharz gebildet ist, wobei der Festschmierstoff 5 - 25 Gew.-% Graphit oder MoS₂ umfasst und wobei die Lackschicht einen Faseranteil von 16 - 50 Gew.-% in Form von Kohlenstofffasern oder Aramidfasern aufweist.

Die DE 10 2013 206 801 A1 beschreibt ein Verfahren zur Herstellung eines beschichteten Kolbens, das die folgenden Schritte umfasst: das zumindest abschnittsweise Behandeln des Kolbens mit einem Plasmastrahl, wobei mittels Pyrolyse eines siliziumhaltigen Präkursors eine siliziumhaltige Schicht auf den behandelten Bereich aufgebracht wird, und das Aufbringen einer Beschichtung auf den behandelten Bereich des Kolbens.

Die US 2013/0269666 A1 zeigt eine Zylinderkopfdichtung zum Abdichten einer Verbrennungskammer.

Weiterhin ist aus dem Stand der Technik eine Eisenbeschichtung des Kolbenhemdes oder des gesamten Kolbens bekannt.

Die Anwendung und Effekte solcher Beschichtungen sind hinlänglich bekannt und werden im Weiteren nicht näher beschrieben.

Aufgabe der Erfindung ist eine Verbesserung der hinlänglich bekannten Arten von Kolbenschaftbeschichtungen hinsichtlich deren Eigenschaften (Reibung, und Verschleiß, Einlaufverhalten sowie Haftfestigkeit der Beschichtung auf dem Kolben).

Die Aufgabe wird gemäß der Erfindung dadurch gelöst, dass ein Kolben einer Brennkraftmaschine vorgeschlagen wird, aufweisend einen Verbundwerkstoff, welcher zumindest bereichsweise auf die Oberfläche des Kolbens aufgebracht ist, wobei der Verbundwerkstoff eine Matrix aus Hochtemperaturpolymeren und flüssigkristallinen Polymeren (LCP) mit mesogenen Gruppen enthält.

Weiterhin ist erfindungsgemäß vorgesehen, dass die Hochtemperaturpolymere aus Polyamidimid- (PAI) und/oder Epoxid-Trägerharzen bestehen.

Weiterhin ist erfindungsgemäß vorgesehen, dass die flüssigkristallinen Polymere (LCP) zur Herstellung des Verbundwerkstoffes in ionischen Flüssigkeiten (IL) gelöst sein können.

Weiterhin ist erfindungsgemäß vorgesehen, dass der Verbundwerkstoff Graphen (einzelne Lage aus Graphitschichtstrukturen), insbesondere funktionalisiertes Graphen, enthält.

Die Aufgabe wird mit anderen Worten wie folgt gelöst: das neue "Hybridpolymer", also der Verbundwerkstoff, soll auf einer Matrix aus Hochtemperaturpolymeren wie Polyamidimid (PAI) oder Epoxidharzen bestehen, welche mit flüssigkristallinen Polymeren (LCP) versehen sind. Diese LCPs können in ionischen Flüssigkeiten (IL) gelöst sein, welche sich dann ebenfalls in die Matrix integrieren würden. Ein weiterer Werkstoff soll aus Graphen, insbesondere aus funktionalisierten Graphen, bestehen. Diese neuen Zusätze (LCP, IL und Graphen) versprechen bedeutende Verbesserungen der Eigenschaften der Grundpolymere.

Durch die neuen Verbundwerkstoffe wird eine Verbesserung des Einlaufverhaltens, die Erhöhung der Fresssicherheit, Senkung der Reibung und erhöhte Verschleißbeständigkeit (höhere Lebensdauer der Bauteile für Brennkraftmaschinen, insbesondere Kolben) erzielt. Dadurch ergibt sich für den Betrieb der Brennkraftmaschine eine Senkung des Kraftstoffverbrauchs und der Kohlenstoffdioxid-Emissionen (CO2-Emissionen).

Als Fortschritt gegenüber dem Stand der Technik werden Qualitätsprobleme wie Schichtabplatzer bzw. Schichtverschleiß bei Bauteilen für Brennkraftmaschinen, insbesondere Kolben, durch den Einsatz der erfindungsgemäßen Verbundwerkstoffe bzw. Beschichtungen verringert oder sogar vermieden. Eisenbeschichtungen können vollständig durch die erfindungsgemäßen Beschichtungen bzw. Verbundwerkstoffe für Bauteile für Brennkraftmaschinen, insbesondere Kolben, ersetzt werden, bei besseren oder zumindest vergleichbaren Verschleißeigenschaften. Durch die erfindungsgemäßen Beschichtungen bzw. Verbundwerkstoffe können Fertigungsprozesse vereinfacht werden.

Hochtemperaturpolymere sind für Einsatztemperaturen von über 200 Grad Celsius geeignet. Polyamidimide (PAI) mit aromatischen Bausteinen in der Polymerkette zählen zu dieser Klasse und bilden thermoplastische Kunststoffe. Darüber hinaus ist eine hohe Chemikalienbeständigkeit und Abriebfestigkeit gegeben. Polyamidimide eignen sich daher besonders als hitzebeständiger Bestandteil eines Verbundwerkstoffes für Kolben für Brennkraftmaschinen. Die Dauertemperaturbeständigkeit liegt dabei über 220 °C.

Flüssigkristalline Polymere (englisch: liquid crystal polymer, LCP) besitzen im Vergleich zu den üblichen Thermoplasten bereits im schmelzflüssigen und/oder im gelösten Zustand geordnete, meist kristalline Bereiche, die Strukturen höherer Ordnung aufweisen. Diese liegen zwischen dem des dreidimensional vollgeordneten Kristalls und dem der gewöhnlichen, strukturell ungeordneten Flüssigkeit. Durch diese hochorientierten Strukturen sind LCP im festen Zustand selbstverstärkend. Voraussetzung dafür ist das Vorhandensein bestimmter Strukturelemente, sogenannter mesogener Gruppen. Diese können sich sowohl in der Hauptkette als auch in Seitenketten befinden. Neben der Unterscheidung als Haupt- oder Seitenketten LCP können diese auch nach ihren Existenzbedingungen klassifiziert werden. Entsprechend unterscheidet man dann in thermotrope LCPs (flüssigkristalline Phase in der Schmelze) und lyotrope LCPs (flüssigkristalline Phase in Lösung). Aus der Anordnung der Mesogene in den Polymerketten resultieren außerordentliche chemische und mechanische Eigenschaften. Beispielsweise zeigen Hauptketten-LCPs parallel zur Molekülachse eine extrem hohe Zugfestigkeit und einen hohen Elastizitätsmodul auf. Daher eignen sich Hauptkettenflüssigkristalline Polymere für den Einsatz als Hochleistungsfaser für die Verwendung in einem Verbundwerkstoff für Kolben zum Einsatz in Brennkraftmaschinen besonders gut. Die Anisotropie vieler Eigenschaften ermöglicht so ein gezieltes Einstellen der Eigenschaften des Werkstoffverbundes. Epoxide bezeichnen eine Gruppe von reaktiven organischen Verbindungen, die einen Ring bestehend aus drei Atomen, davon zwei C- und ein O-Atom, als Strukturelement enthalten. Unter Ringöffnung reagiert die Verbindungsklasse der Epoxide mit einer Vielzahl von organischen Verbindungen. Beispielsweise polymerisieren Epoxide unter geeigneten Bedingungen mit mehrwertigen Phenolen zu Epoxidharzen. Epoxidharze (EP-Harze) sind Polyether. Sie gehören zu den Reaktionsharzen, die mit einem Härter und gegebenenfalls weiteren Zusatzstoffen zu einem duroplastischen Kunststoff umgesetzt werden können. Die Komponente Härter stellt dabei den Reaktionspartner dar und ist somit fester Bestandteil des entstandenen Kunststoff. Die so erzeugten Duroplaste besitzen gute mechanische Eigenschaften sowie eine gute Temperatur- und Chemikalienbeständigkeit. Aufgrund dieser Eigenschaften sind sie besonders zur Verwendung in einem Verbundwerkstoff für Kolben geeignet.

Ionische Flüssigkeiten (IL) sind Substanzen, die vollständig aus Ionen aufgebaut und im Gegensatz zu hochviskosen und korrosiven Schmelzen konventioneller Salze (z.B. Alkalisalzschmelzen) häufig schon bei Raumtemperatur (RTILs, Room Temperature Ionic Liquids) in flüssiger Phase mit moderaten Viskositäten vorliegen bzw. nach Definition einen Schmelzpunkt < 100 °C aufweisen. Für die niedrigen Schmelzpunkte ionischer Flüssigkeiten sind auf molekularer Ebene hauptsächlich drei strukturelle Eigenschaften des Kations von Bedeutung: nämlich eine geringe Symmetrie, eine gute Ladungsverteilung sowie geringe intermolekulare Wechselwirkungen. Diese Eigenschaften verhindern die Bildung eines stabilen Kristallgitters. Die Eigenschaften von ionischen Flüssigkeiten wie beispielsweise die Löslichkeit, Schmelzpunkt und thermische Stabilität können durch Modifikation der Ionenpaare gezielt eingestellt und auf die Bedürfnisse angepasst werden. Daher eignen sie sich besonders zur Herstellung oder als Teil eines Verbundwerkstoffes für Kolben für Brennkraftmaschinen.

Als Graphen bezeichnet man genau eine einatomige Lage reinen Kohlenstoffs. Dieses Material ist eine von mehreren (kristallographischen) Modifikationen des Kohlenstoffs. Diese haben trotz gleicher chemischer Zusammensetzung unterschiedliche Eigenschaften, was auf der unterschiedlichen Anordnung der Atome beruht. Mit einer zweidimensionalen Struktur, in der jedes Kohlenstoffatom im Winkel von 120° von drei weiteren umgeben ist, bildet sich eine Art bienenwabenförmiges Muster aus. Graphen gehört zu den stabilsten bekannten Materialien und weist unter anderem eine hohe Reißfestigkeit auf. Durch diese Eigenschaften eignet sich Graphen besonders zur Herstellung eines Verbundwerkstoffes für Kolben für Brennkraftmaschinen.

Der erfindungsgemäße Verbundwerkstoff kann als Beschichtung zumindest bereichsweise auf die Oberfläche von Bauteilen für Brennkraftmaschinen, insbesondere Kolben, aufgebracht werden.

## Patentansprüche

1. Kolben einer Brennkraftmaschine, aufweisend einen Verbundwerkstoff, welcher zumindest bereichsweise auf die Oberfläche des Kolbens aufgebracht ist, wobei der Verbundwerkstoff eine Matrix aus Hochtemperaturpolymeren und flüssigkristallinen Polymeren (LCP) mit mesogenen Gruppen enthält, und wobei der Verbundwerkstoff Graphen enthält.

2. Kolben nach Patentanspruch 1, **dadurch gekennzeichnet, dass** die Hochtemperaturpolymere aus Polyamidimiden (PAI) und/oder Epoxidharzen bestehen.

3. Kolben nach einem der vorhergehenden Patentansprüche, **dadurch gekennzeichnet, dass** die flüssigkristallinen Polymere (LCP) zur Herstellung des Verbundwerkstoffes in ionischen Flüssigkeiten (IL) gelöst sind.

4. Kolben nach einem der vorhergehenden Patentansprüche, **dadurch gekennzeichnet, dass** der Verbundwerkstoff funktionalisiertes Graphen enthält.

## Claims

1. Piston of an internal combustion engine, comprising a composite material which is applied at least in regions to the surface of the piston, wherein the composite material contains a matrix of high-temperature polymers and liquid crystalline polymers (LCP) with mesogenic groups, and wherein the composite material contains graphene.

2. Piston according to patent claim 1, **characterized in that** the high-temperature polymers consist of polyamide imides (PAI) and/or epoxy resins.

3. Piston according to one of the preceding patent claims, **characterized in that** the liquid crystalline polymers (LCP) are dissolved in ionic liquids (IL) for producing the composite material.

4. Piston according to one of the preceding patent claims, **characterized in that** the composite material contains functionalized graphene.

## Revendications

1. Piston d'un moteur à combustion interne, comprenant un matériau composite qui est appliqué au moins dans certaines régions à la surface du piston, dans lequel le matériau composite contient une matrice de polymères à haute température et de polymères à cristaux liquides (LCP) comportant des groupes mésogènes, et dans lequel le matériau composite contient du graphène.

2. Piston selon la revendication 1, **caractérisé en ce que** les polymères à haute température sont constitués de polyamide-imides (PAI) et/ou de résines époxy.

3. Piston selon l'une des revendications précédentes, **caractérisé en ce que** les polymères à cristaux liquides (LCP) sont dissous dans des liquides ioniques (IL) pour produire le matériau composite.

4. Piston selon l'une des revendications précédentes, **caractérisé en ce que** le matériau composite contient du graphène fonctionnalisé.
